# EUROPÄISCHE PATENTSCHRIFT

(11) **EP 3 025 066 B1**
(45) Veröffentlichungstag und Bekanntmachung des Hinweises auf die Patenterteilung: **17.10.2018**
(21) Anmeldenummer: 14736768.4
(22) Anmeldetag: 04.07.2014
(51) Int. Cl.: F16B 37/06, F16B 5/02

(54) **BLINDNIETMUTTER FÜR DIE VERBINDUNG ZWEIER BAUTEILE**
BLIND RIVET NUT FOR THE CONNECTION OF TWO COMPONENTS
ÉCROU À SERTIR EN AVEUGLE POUR LE RACCORDEMENT DE DEUX ÉLÉMENTS

(30) Priorität: 22.07.2013 DE 102013214247
(43) Veröffentlichungstag der Anmeldung: 01.06.2016
(73) Patentinhaber: Bayerische Motoren Werke Aktiengesellschaft, 80809 München (DE)
(72) Erfinder: BEIL, Andreas, 80935 München (DE); BERTHOLD, Christian, 84171 Baierbach (DE); SCHNAUFER, Thomas, 82386 Oberhausen (DE); SPITZER, Simon, 80339 München (DE); WEINMANN, Robert, 87719 Mindelheim (DE)
(86) Internationale Anmeldenummer: PCT/EP2014/064327
(87) Internationale Veröffentlichungsnummer: WO 2015/010877

(56) Entgegenhaltungen:
- EP-A2- 0 936 362
- DE-A1- 1 500 763
- DE-A1- 19 962 595
- DE-A1-102012 015 144
- US-A- 3 369 442

## Beschreibung

Die vorliegende Erfindung betrifft eine Blindnietmutter für die Verbindung zweier Bauteile mittels einer Schraubverbindung sowie ein Bauteilsystem mit zwei miteinander über eine Blindnietmutter und eine Schraube verbundene Bauteile. Grundsätzlich ist es bekannt, dass für die Verbindung zweier Bauteile Blindnietmuttern eingesetzt werden (siehe z.B. EP 0 936 362 A2). Dabei wird eine bekannte Blindnietmutter an einem ersten Bauteil in einer Nietöffnung über einen Nietvorgang befestigt. Die Blindnietmutter weist ein Innengewinde auf, in welches anschließend eine Schraube eingeschraubt werden kann. Die Schraube erstreckt sich dabei durch eine entsprechende Schrauböffnung in einem zweiten Bauteil, so dass eine klemmende Verbindung der beiden Bauteile aneinander über die Schraubverbindung und die Blindnietmutter hergestellt werden kann.

Nachteilhaft bei bekannten Blindnietmuttern sowie bei bekannten Bauteilsystemen ist es, dass die Kraftübertragung, insbesondere bei modernen Werkstoffen, nicht in idealer Weise gewährleistet ist. So besteht grundsätzlich die Gefahr von Kraft- bzw. Spannungsspitzen bei hohen Belastungssituationen an solchen Verbindungsstellen. Insbesondere, wenn eines der beiden Materialien oder beide Materialien der beiden Bauteile ein Faserverbundwerkstoff, insbesondere CFK oder GFK, sind, treten Risiken hinsichtlich erhöhter Bauteilbelastungen auf. Dabei kann es zu Beschädigungen einzelner Faserabschnitte in dem jeweiligen Faserverbundmaterial kommen.

Es ist Aufgabe der vorliegenden Erfindung, in kostengünstiger und einfacher Weise die voranstehend beschriebenen Nachteile zu beheben. Insbesondere ist es Aufgabe der vorliegenden Erfindung, in kostengünstiger und einfacher Weise eine Kraftübertragung der Verbindung mit erhöhten Anforderungsqualitäten hinsichtlich anspruchsvollen Belastungseinsatzsituationen zu gewährleisten.

Voranstehende Aufgabe wird gelöst durch eine Blindnietmutter mit den Merkmalen des Anspruchs 1 und einem Bauteilsystem mit den Merkmalen des Anspruchs 8. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Blindnietmutter beschrieben sind, selbstverständlich auch im Zusammenhang mit dem erfindungsgemäßen Bauteilsystem und jeweils umgekehrt, so dass bezüglich der Offenbarung zu den einzelnen Erfindungsaspekten stets wechselseitig Bezug genommen wird bzw. werden kann.

Eine erfindungsgemäße Blindnietmutter dient der Verbindung zweier Bauteile mittels einer Schraubverbindung. Hierfür weist die Blindnietmutter einen Nietschaft mit einem Innengewinde auf, an dessen axialem Ende ein Verformungsabschnitt für die Erzeugung der Nietverbindung angeordnet ist. Eine erfindungsgemäße Blindnietmutter zeichnet sich dadurch aus, dass am axialen zweiten Ende des Nietschafts ein Nietkopf angeordnet ist mit einer Auflagefläche für die Auflage einer benachbarten Bauteilfläche. Dabei weist die Auflagefläche eine radiale Erstreckung auf, welche größer oder gleich dem 1,2-fachen der radialen Erstreckung des Nietschafts ausgebildet ist.

Eine erfindungsgemäße Blindnietmutter weist in bekannter Weise einen Verformungsabschnitt auf, welcher mithilfe eines Gewindedorns verformt werden kann und damit die gewünschte formschlüssige Verbindung als Nietverbindung zwischen Blindnietmutter und einem ersten Bauteil herstellen kann. Dafür ist in axialer Richtung die Blindnietmutter in ihrem Nietschaft mit einer Durchgangsöffnung versehen. In dieser Durchgangsöffnung ist ein Innengewinde angeordnet, welches insbesondere als metrisches Innengewinde ausgebildet ist.

Erfindungsgemäß ist an dem zweiten Ende des Nietschafts ein Nietkopf angeordnet, welcher explizit eine Auflagefläche zur Kraftübertragung von einer benachbarten Bauteilfläche zur Verfügung stellt. In einer montierten Situation liegt also das zweite Bauteil an der Auflagefläche des Nietkopfs an, so dass über eine Schraubverbindung mit einer Schraube Kraft auf das zweite Bauteil aufgebracht und von diesem in die Auflagefläche des Nietkopfs eingebracht werden kann. Die Auflagefläche dient also der flächigen Kontaktierung des benachbarten Bauteils bzw. der benachbarten Bauteilfläche.

Durch die Vergrößerung dieser Auflagefläche auf mindestens das 1,2-fache der radialen Erstreckung des Nietschafts wird eine verbesserte Kraftübertragung, insbesondere mit reduzierter Flächenpressung, zur Verfügung gestellt. Damit wird eine großflächigere Abstützung erzeugt, welche auch in schwierigen bzw. hohen Einsatzbelastungssituationen eine Reduktion der Bauteilbelastungen mit sich bringt. Insbesondere bei Kippbelastungen bzw. Momentenbelastungen der Schraubverbindung an einer erfindungsgemäßen Blindnietmutter, bringt die vergrößerte Auflagefläche eine Reduktion von Spannungsspitzen in den jeweiligen Bauteilen mit sich. Darüber hinaus wird auf diese Weise ein vergrößerter Hebel zur Verfügung gestellt, so dass mit größerem Abstand zur Längsachse der Blindnietmutter eine Abstützung gegen Momente durch die Auflagefläche zur Verfügung gestellt werden kann.

Üblicherweise erstreckt sich der Nietschaft in radialer Richtung gleichweit oder ähnlich weit, wie eine entsprechende Nietöffnung in einem zugehörigen ersten Bauteil ausgebildet ist. Somit entspricht damit die Auflagefläche auch im Wesentlichen mindestens dem 1,2-fachen der radialen Erstreckung einer solchen Nietöffnung. Es ist grundsätzlich darauf hinzuweisen, dass sowohl eine entsprechende Nietöffnung, als auch der Nietschaft und der Nietkopf nicht zwingend einen rotationssymmetrischen Querschnitt aufweisen müssen. Vielmehr kann es vorteilhaft sein, andere Querschnittsformen zu verwenden. So sind insbesondere für den Nietkopf, wie später noch erläutert wird, auch von der Kreisform abweichende Außenkonturen bzw. Querschnitte denkbar. Für den Nietschaft selbst wird vorzugsweise eine runde Außenkontur gewählt, um hier eine rotationssymmetrische und dementsprechend axial rotationsfreie Einsetzmöglichkeit in eine entsprechende Nietöffnung zu geben.

Bei dem Innengewinde ist insbesondere ein Verlauf über wenigstens einen Abschnitt ausgehend vom Nietkopf vorgesehen. Der Nietkopf selbst ist also ebenfalls mit einer Gewindeöffnung versehen, so dass von diesem zweiten Ende des Nietschafts durch den Nietkopf hinein eine Schraube in das Innengewinde eingeschraubt werden kann.

Die Durchgangsöffnung kann dabei einen gleichmäßigen oder einen unterschiedlichen Querschnitt aufweisen. Bevorzugt ist es, wenn sich das Innengewinde nur bis zum Verformungsabschnitt erstreckt und der Verformungsabschnitt frei von dem Innengewinde ausgebildet ist. Damit wird sichergestellt, dass beim Herstellen der Nietverbindung für die Blindnietmutter am ersten Bauteil möglichst keine oder nur eine geringe Beeinflussung des Materials im Innengewindebereich zur Verfügung gestellt wird.

Erfindungsgemäß können auf diese Weise zwei Materialien im Wesentlichen unabhängig ihrer tatsächlichen Materialwahl verbunden werden. Insbesondere kann eine Blindnietmutter aus einem Metallmaterial eingesetzt werden, um auch moderne Materialien in Form von Glasfasermaterialien miteinander zu verbinden.

Es kann von Vorteil sein, wenn bei einer erfindungsgemäßen Blindnietmutter die radiale Erstreckung der Auflagefläche zwischen ca. 15 mm und ca. 22 mm ausgebildet ist. Bevorzugt ist die radiale Erstreckung der Auflagefläche zwischen ca. 18 mm und ca. 20 mm ausgebildet. Insbesondere bezieht sich dies auf einen Nietschaft mit einer radialen Erstreckung im Bereich zwischen ca. 6 mm und ca. 10 mm. Es ist also bevorzugt, dass sich der Unterschied zwischen der Auflagefläche und dem Nietschaft hinsichtlich der jeweiligen radialen Erstreckung sogar deutlich größer als das Minimum von 1,2 darstellt. Bevorzugt werden also Faktoren, die oberhalb von ca. 1,5, insbesondere im Bereich von ca. 2, für die Korrelation zwischen der radialen Erstreckung der Auflagefläche und der radialen Erstreckung des Nietschafts ausgebildet sind. Die Vergrößerung der Fläche in diesem Maße führt dazu, dass die erfindungsgemäßen Vorteile der Reduktion der Flächenpressung und der verbesserten Abstützung gegen Kippmomente noch weiter verbessert werden. Eine weitere Vergrößerung würde diese Vorteile zwar noch weiter erhöhen, zusätzlich jedoch Probleme hinsichtlich Bauraum, Materialaufwand und Gewicht mit sich bringen. Die voranstehenden Grenzen sind somit als besonders vorteilhafte bzw. optimierte Werte für die radiale Erstreckung der Auflagefläche zu verstehen.

Vorteilhaft ist es ebenfalls, wenn bei einer erfindungsgemäßen Blindnietmutter der Nietkopf eine von der Kreisform abweichende Außenkontur aufweist. Dabei ist grundsätzlich jede Außenkontur denkbar, welche keine Rotationssymmetrie aufweist.

Insbesondere ist die Außenkontur entlang der Achse im Wesentlichen kontinuierlich bzw. gleich ausgebildet, so dass eine verbesserte Greifbarkeit mit den Händen oder mit einem Werkzeug gegeben ist. Um eine solche verbesserte Greifbarkeit zur Verfügung zu stellen, kann auch auf der Außenfläche der Außenkontur zusätzlich eine sogenannte Riffelung oder Rändelung vorgesehen sein, um einen Reibkontakt mit der Hand eines Benutzers zu verbessern. Dies dient dazu, dass bei einem Defekt der Blindnietmutter bzw. einem Ausreißen des Innengewindes ein erleichtertes Ausbohren der Blindnietmutter erfolgen kann. So wird in einem solchen Fall über einen Bohrer in die Durchgangsöffnung der Blindnietmutter ein vergrößertes Loch eingebohrt, so dass eine Reduktion der Haltekraft des Verformungsabschnitts erzielt wird. Um zu vermeiden, dass sich die Blindnietmutter während des Bohrvorganges mit dem Bohrkopf mitdreht, wird über eine von der Kreisform abweichende Außenkontur ein Festhalten gegen Mitrotation für den Nietkopf leicht und kostengünstig sowie schnell möglich.

Bei der Ausführungsform einer Blindnietmutter gemäß dem voranstehenden Anspruch kann es von Vorteil sein, wenn die Außenkontur des Nietkopfes eine metrische Sechskantform aufweist. Damit werden die gleichen Vorteile erzielt, wie sie im voranstehenden Absatz erläutert werden. Insbesondere kann mit Standardwerkzeugen ein Festhalten des Nietkopfes erfolgen, so dass z.B. ein Maulschlüssel oder ein Ringschlüssel zum Einsatz kommen kann. Damit wird die Handhabbarkeit einer erfindungsgemäßen Blindnietmutter noch weiter erleichtert.

Vorteilhaft ist es darüber hinaus, wenn bei einer erfindungsgemäßen Blindnietmutter diese wenigstens abschnittweise aus einem nichtrostenden Material, insbesondere aus Edelstahl, ausgebildet ist. Nichtrostende Materialien sind insbesondere nichtrostende Metalle im Sinne der vorliegenden Erfindung. Dabei ist vorzugsweise die gesamte Blindnietmutter aus einem einzigen Stück bzw. integral aus einem einzigen Bauteil hergestellt. Damit ist vorzugsweise auch die gesamte Blindnietmutter aus nichtrostendem Material ausgebildet. Als Edelstahl kommen insbesondere V2A-Stähle bzw. V4A-Stähle zum Einsatz. Durch diese Ausführungsform wird insbesondere in Korrelation mit wenigstens einem Bauteil aus einem Faserverbundwerkstoff (z.B. CFK und GFK) die Korrosionsbeständigkeit erhöht. So wird durch die Korrelation mit einem CFK-Bauteil eine Blindnietmutter aus einem Metall eine elektrochemische Zelle bilden. Um die dadurch entstehende hohe Korrosionswahrscheinlichkeit zu reduzieren bzw. gänzlich aufzuheben, wird ein nichtrostendes Material, insbesondere Edelstahl, große Vorteile mit sich bringen.

Vorteilhaft ist es ebenfalls, wenn bei einer erfindungsgemäßen Blindnietmutter diese wenigstens abschnittsweise eine Schutzbeschichtung gegen Korrosion aufweist. Wie bereits im voranstehenden Absatz erläutert worden ist, ist Korrosion, insbesondere bei der Verwendung moderner und besonders leichter Materialien wie Faserverbundwerkstoff, ein grundsätzliches Risiko. Dementsprechend kann eine Schutzbeschichtung auch bei minderwertigen Materialien für die Ausbildung der Blindnietmutter einen entsprechenden Korrosionsschutz mit sich bringen. Selbstverständlich können Schutzbeschichtungen auch auf einzelne Abschnitte der Blindnietmutter aufgebracht werden, um einen expliziten lokalen Schutz zur Verfügung zu stellen. Auch eine Kombination mit wenigstens abschnittsweise aus nichtrostendem Material ausgebildeten Blindnietmuttern ist mit einer erfindungsgemäßen Schutzbeschichtung möglich.

Vorteilhaft kann es darüber hinaus sein, wenn bei einer erfindungsgemäßen Blindnietmutter der Nietkopf auf der entgegengesetzt zur Auflagefläche ausgerichteten Seite eine Dichtfläche zum Abdichten einer kontaktierenden Bauteilfläche aufweist, gegen den Eintritt von Flüssigkeit. Der Eintritt von Flüssigkeit ist dabei in die zugehörige Nietöffnung zu verstehen. Mit anderen Worten wird die Blindnietmutter im eingesetzten und befestigten Zustand mit der Nietverbindung im ersten Bauteil zusätzlich eine Dichtwirkung zum Nietschaft bzw. Nietkopf und diesem ersten Bauteil zur Verfügung stellen. Die Dichtfläche kontaktiert also eine entsprechende benachbarte Bauteilfläche des ersten Bauteils. Um insbesondere Wasser gegen Eintritt durch diesen Spalt zu hindern, kann diese Dichtfläche, z.B. durch eine entsprechende Oberflächenstruktur dieser Seite des Nietkopfs, zur Verfügung gestellt werden. Auch ist es möglich, dass die Dichtfläche als Beschichtung auf dieser Seite des Nietkopfes ausgebildet ist, welche z.B. im flüssigen oder zumindest fließfähigen Zustand auf diesen aufgetragen wird. Damit wird eine weitere Verbesserung, insbesondere mit Bezug auf die Korrosionsbeständigkeit, erzielt.

Ebenfalls Gegenstand der vorliegenden Erfindung ist ein Bauteilsystem, aufweisend ein erstes Bauteil mit einer Nietöffnung und ein zweites Bauteil mit einer Schrauböffnung. Ein erfindungsgemäßes Bauteilsystem zeichnet sich dadurch aus, dass in der Nietöffnung eine Blindnietmutter gemäß der vorliegenden Erfindung befestigt ist. Dabei erstreckt sich eine Schraube durch die Schrauböffnung des zweiten Bauteils und ist in das Innengewinde des Nietschafts geschraubt. Weiter liegt eine erste Bauteilfläche des zweiten Bauteils an der Auflagefläche des Nietkopfes auf. Durch die Verwendung einer erfindungsgemäßen Blindnietmutter werden bei einem erfindungsgemäßen Bauteilsystem die gleichen Vorteile erzielt, wie sie ausführlich mit Bezug auf eine erfindungsgemäße Blindnietmutter erläutert worden sind. Die beiden Bauteile sind vorzugsweise aus modernen und leichten Materialien hergestellt. Insbesondere ist das erste Bauteil aus einem Faserverbundwerkstoff (CFK oder GFK) hergestellt. Bei einem zweiten Bauteil kann z.B. ein Kunststoffbauteil verwendet werden. Die beiden Bauteile werden also miteinander befestigt, indem die Blindnietmutter eine entsprechende Gewindeverbindungsmöglichkeit am ersten Bauteil zur Verfügung stellt. Mit Hilfe der Schraube erfolgt dann ein Einklemmen des zweiten Bauteils zwischen der befestigten Blindnietmutter und dem Schraubenkopf.

Ein erfindungsgemäßes Bauteilsystem lässt sich dahingehend weiterbilden, dass zwischen einem Schraubkopf der Schraube und einer zweiten Bauteilfläche des zweiten Bauteils eine Beilagscheibe angeordnet ist. Dabei ist die radiale Erstreckung der Auflage des Nietkopfs größer oder gleich einer radialen Erstreckung der Beilagscheibe. Damit wird eine noch weiter verbesserte Kraftübertragungssituation zur Verfügung gestellt. Insbesondere bei der Übertragung von Kippmomenten zwischen der Schraube und der Blindnietmutter wird auf diese Weise eine verbesserte Abstützung mit vergrößertem Hebel für die Auflagefläche der Blindnietmutter möglich.

Ein weiterer Vorteil ist erzielbar, wenn bei einem erfindungsgemäßen Bauteilesystem die Schraubenöffnung mit einer geometrischen Erstreckung ausgebildet ist, welche in Breitenrichtung kleiner und in Längsrichtung größer als die radiale Erstreckung der Auflagefläche des Nietkopfs ist. Damit wird sozusagen eine Langlochfunktionalität für die Schrauböffnung zur Verfügung gestellt, welche eine Einstellbarkeit in dieser Längsrichtung ermöglicht. Eine Relativpositionierung kann damit größere zulässige Toleranzen bei der Herstellung der beiden Bauteile erlauben. Mit anderen Worten kann zwar durch diese Schraubenöffnung der Schaft der Schraube hindurchragen, jedoch blockiert diese Öffnung in Breitenrichtung durch die geringere radiale Erstreckung ein Hindurchtreten des Nietkopfs.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigten schematisch:
- Fig. 1: eine erste Ausführungsform einer erfindungsgemäßen Blindnietmutter,
- Fig. 2: die Ausführungsform der Fig. 1 in Draufsicht,
- Fig. 3: eine weitere Ausführungsform einer erfindungsgemäßen Blindnietmutter,
- Fig. 4: die Ausführungsform der Fig. 3 in perspektivischer Darstellung,
- Fig. 5: eine Ausführungsform eines erfindungsgemäßen Bauteilsystems, und
- Fig. 6: eine Draufsicht auf eine Schrauböffnung in einem zweiten Bauteil.

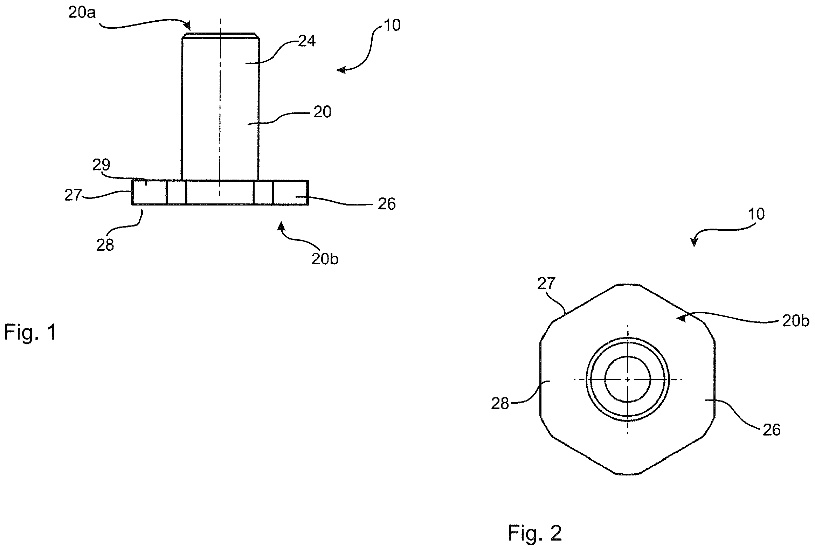

Die Fig. 1 und 2 zeigen eine erste Ausführungsform einer erfindungsgemäßen Blindnietmutter 10. Diese Blindnietmutter 10 ist mit einem Nietschaft 20 ausgebildet, an dessen erstem Ende 20a ein Verformungsabschnitt 24 angeordnet ist. Am zweiten Ende 20b des Nietschafts 20 befindet sich ein Nietkopf 26. Wie insbesondere aus Fig. 2 gut zu erkennen ist, weist der Nietkopf 26 eine Außenkontur 27 auf, welche von der Kreisform abweicht und hier als Sechskant in metrischer Ausbildungsform zur Verfügung gestellt ist.

Weiter ist, in diesen beiden Figuren nicht erkennbar, eine Durchgangsbohrung durch die gesamte axiale Erstreckung des Nietschafts 20 vorgesehen. In diesem ist ein entsprechendes Innengewinde 22 angeordnet. Wie den Fig. 1 und 2 weiter zu entnehmen ist, handelt es sich bei der radialen Erstreckung D2 des Nietkopfes 26 um eine deutlich größere geometrische Erstreckung, als dies beim Nietschaft 20 der Fall ist. Damit werden die erfindungsgemäßen Vorteile erzielt. Darüber hinaus ist auf der der Auflagefläche 28 des Nietkopfs 26 entgegengesetzt ausgerichteten Fläche des Nietkopfs 26 eine Dichtfläche 29 angeordnet. Diese Dichtfläche 29 dient, wie später noch erläutert wird, einer entsprechenden zusätzlichen Abdichtung.

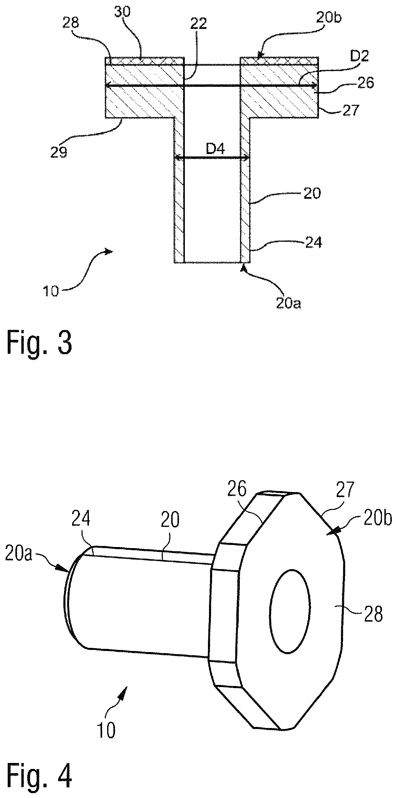

Bei der Ausführungsform der Fig. 3 und 4 ist gut zu erkennen, wie das Verhältnis der radialen Erstreckung D2 der Auflagefläche 28 sich zur radialen Erstreckung D4 des Nietschafts 20 verhält. Auch ist hier gut die Durchgangsbohrung mit der entsprechenden Ausbildung des Innengewindes 22 zu erkennen. Auf der Auflagefläche 28 des Nietkopfs 26 ist hier darüber hinaus eine Schutzbeschichtung 30 für den Korrosionsschutz zur Verfügung gestellt. In Kombination oder alternativ dazu ist das Material der Blindnietmutter 10 als nichtrostendes Material, insbesondere in Form von Edelstahl, ausgebildet.

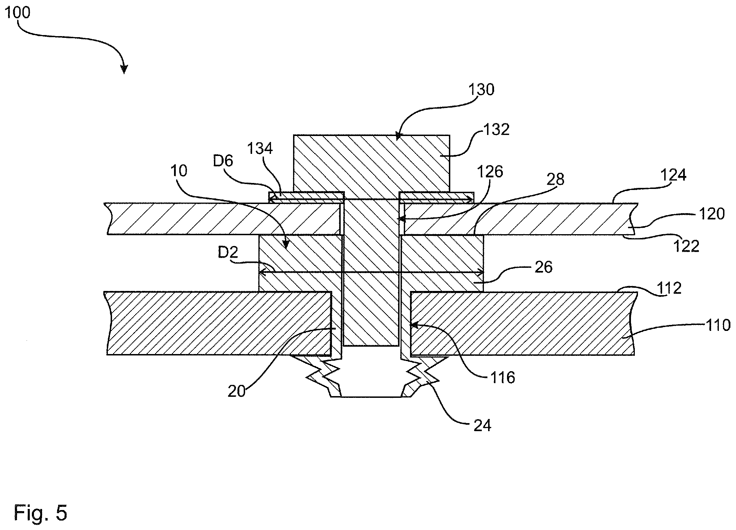

Fig. 5 zeigt die Einbausituation bei der Ausbildung eines Bauteilsystems 100. Die beiden Bauteile 110 und 120 sind aneinander befestigt. Das Bauteil 110 ist dabei vorzugsweise ein Faserverbundwerkstoffbauteil aus CFK oder GFK. Bei dem zweiten Bauteil 120 handelt es sich insbesondere um ein Kunststoffmaterial. Die Blindnietmutter 10 wurde durch Verformung des Verformungsabschnitts 24 in formschlüssiger Weise in der Nietöffnung 116 des ersten Bauteils 110 befestigt. Dabei ist auch die Dichtfläche 29 in kontaktierenden Anschlag mit der gegenüberliegenden und benachbarten Bauteilfläche 112 des ersten Bauteils 110 gelangt. Auf der Auflagefläche 28 des Nietkopfs 26 liegt nun die benachbarte erste Bauteilfläche 120 des zweiten Bauteils 120 auf. Auf der zweiten Bauteilfläche 124 ist eine Beilagscheibe 134 angeordnet, welche durch den Schraubenkopf 132 einer Schraube 130 angepresst wird. Diese Schraube 130 erstreckt sich durch die entsprechende Schrauböffnung 126 und ist in das Innengewinde 22 in die Blindnietmutter 10 eingeschraubt. Wie der Fig. 5 gut zu entnehmen ist, ist hier eine Korrelation zwischen der radialen Erstreckung D6 der Beilagscheibe 134 und der radialen Erstreckung D2 der Auflagefläche 28 dahingehend vorgesehen, dass die radiale Erstreckung der Auflagefläche größer ausgebildet ist. Damit wird eine weiter verbesserte Momentenabstützung erreicht. Weiter ist hier die Auflagefläche 28 ausgebildet, um ein Gleiten der ersten Bauteilfläche 122 zu ermöglichen. Dies erlaubt den Ausgleich von Ausdehnungsunterschieden bei unterschiedlichen Temperaturausdehnungskoeffizienten. Auch wird durch die großer radiale Erstreckung der Auflagefläche 28 ein Toleranzausgleich zwischen den beiden Bauteilen 110 und 120 möglich.

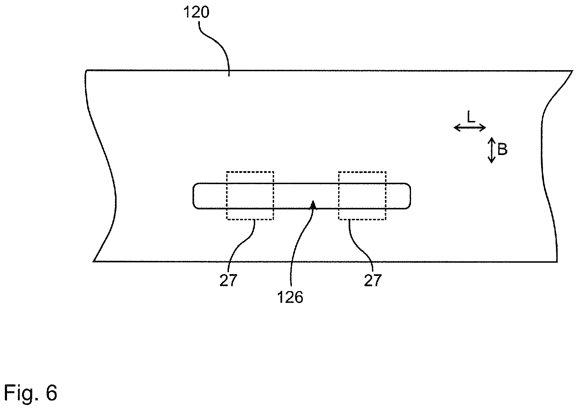

In Fig. 6 ist in Draufsicht auf das zweite Bauteil 120 eine mögliche Ausbildung der Schrauböffnung 126 dargestellt. Diese weist unterschiedliche Erstreckungen in Längenrichtung L und in Breitenrichtung B auf. Mit Strichlinien sind die unterhalb des zweiten Bauteils 120 angeordneten möglichen Positionen einer Blindnietmutter 10 dargestellt. Insbesondere ist hier eine quadratische Außenkontur 27 des zugehörigen Nietkopfs 26 dargestellt. Die beiden unterschiedlichen Positionen zeigen, dass in Form eines Langlochs ausgebildete Schrauböffnungen 126 eine Einstellbarkeit der Relativpositionierung des zweiten Bauteils 120 zum ersten Bauteil 110 entlang der Längsrichtung erlauben.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Blindnietmutter
- 20: Nietschaft
- 20a: erstes Ende
- 20b: zweites Ende
- 22: Innengewinde
- 24: Verformungsabschnitt
- 26: Nietkopf
- 27: Außenkontur des Nietkopfs
- 28: Auflagefläche
- 29: Dichtfläche
- 30: Schutzbeschichtung

- 100: Bauteilsystem
- 110: erstes Bauteil
- 112: Bauteilfläche
- 116: Nietöffnung
- 120: zweites Bauteil
- 122: erste Bauteilfläche
- 124: zweite Bauteilfläche
- 126: Schrauböffnung
- 130: Schraube
- 132: Schraubenkopf
- 134: Beilagscheibe

- D2: radiale Erstreckung der Auflagefläche
- D4: radiale Erstreckung des Nietschafts
- D6: radiale Erstreckung der Beilagscheibe

- B: Breitenrichtung
- L: Längsrichtung

## Patentansprüche

1. Blindnietmutter (10) für die Verbindung zweier Bauteile (110, 120) mittels einer Schraubverbindung, aufweisend einen Nietschaft (20) mit einem Innengewinde (22), an dessen axialem ersten Ende (20a) ein Verformungsabschnitt (24) für die Erzeugung der Nietverbindung angeordnet ist, **dadurch gekennzeichnet, dass** am axialen zweiten Ende (20b) des Nietschafts (20) ein Nietkopf (26) angeordnet ist mit einer Auflagefläche (28) für die Auflage einer benachbarten Bauteilfläche (122), wobei die Auflagefläche (28) eine radiale Erstreckung (D2) aufweist, welche größer oder gleich dem 1,5 fachen und kleiner oder gleich dem ca. 2 fachen der radialen Erstreckung (D4) des Nietschafts (20) ausgebildet ist.

2. Blindnietmutter (10) nach Anspruch 1, **dadurch gekennzeichnet, dass** die radiale Erstreckung (D2) der Auflagefläche (28) zwischen ca. 15 mm und ca. 22 mm ausgebildet ist.

3. Blindnietmutter (10) nach einem der vorangegangenen Ansprüche, **dadurch gekennzeichnet, dass** der Nietkopf (26) eine von der Kreisform abweichende Außenkontur (27) aufweist.

4. Blindnietmutter (10) nach Anspruch 3, **dadurch gekennzeichnet, dass** die Außenkontur (27) des Nietkopfs (26) eine metrische Sechskantform aufweist.

5. Blindnietmutter (10) nach einem der vorangegangenen Ansprüche, **dadurch gekennzeichnet, dass** diese wenigstens abschnittsweise aus einem nichtrostenden Material, insbesondere aus Edelstahl, ausgebildet ist.

6. Blindnietmutter (10) nach einem der vorangegangenen Ansprüche, **dadurch gekennzeichnet, dass** diese wenigstens abschnittsweise eine Schutzbeschichtung (30) gegen Korrosion aufweist.

7. Blindnietmutter (10) nach einem der vorangegangenen Ansprüche, **dadurch gekennzeichnet, dass** der Nietkopf (26) auf der entgegengesetzt zur Auflagefläche (28) ausgerichteten Seite eine Dichtfläche (29) zum Abdichten an einer kontaktierenden Bauteilfläche (112) aufweist gegen den Eintritt von Flüssigkeit.

8. Bauteilsystem (100) aufweisend ein erstes Bauteil (110) mit einer Nietöffnung (116) und ein zweites Bauteil (120) mit einer Schrauböffnung (126), **dadurch gekennzeichnet, dass** in der Nietöffnung (116) eine Blindnietmutter (10) mit den Merkmalen eines der Ansprüche 1 bis 7 befestigt ist, wobei eine Schraube (130) sich durch die Schrauböffnung (126) des zweiten Bauteils (120) erstreckt und in das Innengewinde (22) des Nietschafts (20) geschraubt ist, wobei weiter eine erste Bauteilfläche (122) des zweiten Bauteils (120) an der Auflagefläche (28) des Nietkopfs (26) aufliegt.

9. Bauteilsystem (10) nach Anspruch 8, **dadurch gekennzeichnet, dass** zwischen einem Schraubenkopf (132) der Schraube (130) und einer zweiten Bauteilfläche (124) des zweiten Bauteils (120) eine Beilagscheibe (134) angeordnet ist, wobei die radiale Erstreckung (D2) der Auflagefläche (28) des Nietkopfs (26) größer oder gleich einer radialen Erstreckung (D6) der Beilagscheibe (134) ist.

10. Bauteilsystem (10) nach einem der Ansprüche 8 oder 9, **dadurch gekennzeichnet, dass** die Schrauböffnung (126) mit einer geometrischen Erstreckung ausgebildet ist, welche in Breitenrichtung (B) kleiner und in Längsrichtung (L) größer als die radiale Erstreckung (D2) der Auflagefläche (28) des Nietkopfs (26) ist.

## Claims

1. A blind rivet nut (10) for connecting two components (110, 120) by means of a screw connection, having a rivet shank (20) with an internal thread (22), at the axial first end (20a) of which a deformation portion (24) for producing the riveted joint is arranged, **characterised in that** at the axial second end (20b) of the rivet shank (20) there is arranged a rivet head (26) with a contact face (28) for an adjacent component face (122) to lie against, the supporting surface (28) having a radial extent (D2) which is designed to be greater than or equal to 1.5 times and less than or equal to approx. 2 times the radial extent (D4) of the rivet shank (20).

2. A blind rivet nut (10) according to Claim 1, **characterised in that** the radial extent (D2) of the contact face (28) is designed to be between approx. 15 mm and approx. 22 mm.

3. A blind rivet nut (10) according to one of the preceding claims, **characterised in that** the rivet head (26) has an external contour (27) which differs from the circular shape.

4. A blind rivet nut (10) according to Claim 3, **characterised in that** the external contour (27) of the rivet head (26) has a metric hexagon shape.

5. A blind rivet nut (10) according to one of the preceding claims, **characterised in that** it is formed, at least in portions, of a rustproof material, especially high-grade steel.

6. A blind rivet nut (10) according to one of the preceding claims, **characterised in that it** has, at least in portions, a coating (30) which protects against corrosion.

7. A blind rivet nut (10) according to one of the preceding claims, **characterised in that** the rivet head (26) on the side oriented opposite the contact face (28) has a sealing face (29) for sealing off against the ingress of liquid on a contacting component face (112).

8. A component system (100) having a first component (110) with a rivet opening (116) and a second component (120) with a screw opening (126), **characterised in that** a blind rivet nut (10) having the features of one of Claims 1 to 7 is fastened in the rivet opening (116), with a screw (130) extending through the screw opening (126) of the second component (120) and being screwed into the internal thread (22) of the rivet shank (20), with furthermore a first component face (122) of the second component (120) lying against the contact face (28) of the rivet head (26).

9. A component system (10) according to Claim 8, **characterised in that** a shim (134) is arranged between a screw head (132) of the screw (130) and a second component face (124) of the second component (120), the radial extent (D2) of the contact face (28) of the rivet head (26) being greater than or equal to a radial extent (D6) of the shim (134).

10. A component system (10) according to one of Claims 8 or 9, **characterised in that** the screw opening (126) is designed with a geometric extent which is smaller in the breadth direction (B) and greater in the longitudinal direction (L) than the radial extent (D2) of the contact face (28) of the rivet head (26).

## Revendications

1. Ecrou borgne à riveter (10) permettant la liaison de deux pièces (110, 120) par une liaison par vis, comprenant une tige de rivet (20) ayant un filetage interne (22) et comportant à sa première extrémité axiale (20a) un segment de déformation (24) permettant d'obtenir la liaison par rivetage,
**caractérisé en ce que**
la seconde extrémité axiale (20b) de la tige de rivet (20) comporte une tête de rivet (26) avec une surface d'appui (28) permettant l'application d'une surface d'une pièce voisine (122), la surface d'appui (28) ayant une extension radiale (D2) qui est supérieure ou égale à 1,5 fois et inférieure ou égale à environ 2 fois l'extension radiale (D4) de la tige de rivet (20).

2. Ecrou borgne à riveter (10) conforme à la revendication 1,
**caractérisé en ce que**
l'extension radiale (D2) de la surface d'appui (28) est comprise entre environ 15 mm et environ 22 mm.

3. Ecrou borgne à riveter (10) conforme à l'une des revendications précédentes,
**caractérisé en ce que**
la tête de rivet (26) a un contour externe (27) différent d'une forme circulaire.

4. Ecrou borgne à riveter (10) conforme à la revendication 3,
**caractérisé en ce que**
le contour externe (27) de la tête de rivet (26) a une forme à six pans métrique.

5. Ecrou borgne à riveter (10) conforme à l'une des revendications précédentes,
**caractérisé en ce qu'**
il est réalisé au moins par segment en un matériau inoxydable, en particulier en acier spécial.

6. Ecrou borgne à riveter (10) conforme à l'une des revendications précédentes,
**caractérisé en ce qu'**
il comporte au moins par zones un revêtement de protection anticorrosion (30).

7. Ecrou borgne à riveter (10) conforme à l'une des revendications précédentes,
**caractérisé en ce que**
la tête de rivet (26) comporte, sur son côté orienté à l'opposé de la surface d'appui (28) une surface d'étanchéité (29) permettant d'assurer l'étanchéité au niveau d'une surface de pièce à mettre en contact (112) contre la pénétration d'humidité.

8. Système de pièces (100) comprenant une première pièce (110) ayant une ouverture de rivetage (116) et une seconde pièce (120) ayant une ouverture de vissage (126),
**caractérisé en ce que**
dans l'ouverture de rivetage (116) est fixé un écrou borgne à riveter (10) conforme à l'une des revendications 1 à 7, une vis (130) s'étendant au travers de l'ouverture de vissage (126) de la seconde pièce (120), et étant vissée dans le filetage interne (22) de la tige de rivet (20), une première surface (122) de la seconde pièce (120) s'appliquant en outre sur la surface d'appui (28) de la tête de rivet (26).

9. Système de pièce (10) conforme à la revendication 8,
**caractérisé en ce qu'**
entre la tête (132) de la vis (130) et une seconde surface (124) de la seconde pièce (120) est montée une cale d'épaisseur (134), l'extension radiale (D2) de la surface d'appui (28) de la tête de rivet (26) étant supérieure ou égale à l'extension radiale (D6) de la cale d'épaisseur (134).

10. Système de pièces (10) conforme à l'une des revendications 8 et 9, **caractérisé en ce que**
l'ouverture de vissage (126) est réalisée avec une extension géométrique qui est inférieure, dans le sens de la largeur (B) et supérieure dans le sens de la largeur (L) à l'extension radiale (D2) de la surface d'appui (28) de la tête de rivet (26).
